# FASCICULE DE BREVET EUROPEEN

(11) **EP 3 415 949 B1**
(45) Date de publication et mention de la délivrance du brevet: **12.05.2021**
(21) Numéro de dépôt: 18176777.3
(22) Date de dépôt: 08.06.2018
(51) Int. Cl.: G01S 17/02, G01S 17/10, G01S 17/89, G01S 7/481, G01S 7/495

(54) **SYSTEME D'OBSERVATION EMBARQUE COMPRENANT UN LIDAR POUR L'OBTENTION D'IMAGES TRIDIMENSIONNELLES HAUTE RESOLUTION**
EINGEBAUTES BEOBACHTUNGSSYSTEM, DAS EINEN LIDAR ZUM ERHALTEN VON 3D-BILDERN MIT HOHER AUFLÖSUNG UMFASST
ON-BOARD OBSERVATION SYSTEM COMPRISING A LIDAR FOR OBTAINING HIGH-RESOLUTION THREE-DIMENSIONAL IMAGES

(30) Priorité: 15.06.2017 FR 1700640
(43) Date de publication de la demande: 19.12.2018
(73) Titulaire: THALES, 92400 Courbevoie (FR)
(72) Inventeur: KRAWCZYK, Rodolphe, 06270 VILLENEUVE-LOUBET (FR); BERGINC, Gérard, 94320 THIAIS (FR)
(74) Mandataire: Marks & Clerk France

(56) Documents cités:
- EP-A1- 2 957 926
- GB-A- 2 539 427
- US-A1- 2010 208 244
- US-B1- 7 248 342
- Clément Mallet ET AL: "Analysis of Full-Waveform lidar data for urban area mapping", , 26 novembre 2010 (2010-11-26), XP055457905, Extrait de l'Internet: URL:http://documents.irevues.inist.fr/bits tream/handle/2042/16841/01-Mallet(coul).pd f?sequence=1
- Alexandrepollini: "Systèmesd'imagerie3DflashLiDAR pourapplicationsspatiales", , 7 avril 2013 (2013-04-07), XP055457910, Extrait de l'Internet: URL:https://atim3d.sciencesconf.org/confer ence/atim3d/pages/Presentation_POLLINI.pdf [extrait le 2018-03-09]
- FARZIN AMZAJERDIAN ET AL: "Imaging Flash Lidar for Autonomous Safe Landing and Spacecraft Proximity Operation", AIAA SPACE 2016, 13 septembre 2016 (2016-09-13), XP055457912, Reston, Virginia DOI: 10.2514/6.2016-5591 ISBN: 978-1-62410-427-5

## Description

Le domaine de l'invention est celui de l'instrumentation optique embarqué sur aéronef ou sur satellite et en particulier sur des petits ou des micro-satellites d'observation terrestre.

Actuellement, pour différentes applications, il existe un besoin d'obtenir rapidement des images haute résolution et si possible tridimensionnelles de certains sites terrestres. Ce besoin ne peut être rempli qu'imparfaitement par les satellites d'observation traditionnels qui ont effectivement une excellente résolution spatiale mais dont le nombre est nécessairement limité compte-tenu de leur coût. Ces « gros » satellites ne peuvent donc pas délivrer rapidement des images haute résolution de n'importe quelle zone du globe.

Pour pallier cet inconvénient, il existe des « petits » satellites, par exemple de type « TacSat », abrégé de « Tactical Satellite ». Ces satellites sont, par exemple, montés sur des plateformes de type « Myriade » ou « Myriade Evolutions ». Ces satellites ont une masse de quelques centaines de kilogrammes pour un volume de quelques centaines de litres. Ces satellites sont destinés à évoluer sur une orbite située entre 400 et 800 kilomètres d'altitude. Quand ils sont destinés à l'observation terrestre, ce type de satellites comporte un télescope. Schématiquement, celui-ci est composé d'un système catadioptrique et d'un imageur matriciel haute résolution. Le système catadioptrique comprend un miroir primaire. A titre d'exemple, les caractéristiques techniques principales du télescope sont les suivantes :

| | |
|---|---|
| Imageur : | Type : CMOS à très bas niveau de bruit |
| | Dimensions : 14 x 16.6 mm² |
| | Taille des pixels : 6.5 microns |
| | Résolution : 2160 pixels par 2560 pixels |
| Télescope : | Ouverture : 60 centimètres |

A titre de premier exemple, pour une altitude du satellite de 400 kilomètres et une focale de 2.6 mètres, le champ couvert au sol est un rectangle de 2.16 x 2.56 km², la résolution étant de 1 mètre. A titre de second exemple, pour la même altitude du satellite et une focale de 5.2 mètres, le champ couvert au sol est un rectangle de 1.08 x 1.28 km², la résolution étant de 50 centimètres.

Pour certaines applications, en particulier si l'on souhaite envoyer sur zone des drones d'observation, la haute résolution tridimensionnelle de ce type de satellite peut se révéler insuffisante dans la mesure où la navigation du drone nécessite une information cartographique tridimensionnelle. Il est possible d'obtenir des images stéréoscopiques ou tomographiques à partir des images prises par satellite. Il suffit de corréler des images prises par le satellite à plusieurs instants différents et couvrant la même zone d'observation de façon à obtenir plusieurs vues sous des incidences différentes. En effet, à chaque instant, correspond une position différente du satellite. On reconstruit ensuite une cartographie tridimensionnelle de la zone observée. Cette solution a un certain nombre d'inconvénients. La prise d'images tomographiques prend un certain temps dans la mesure où l'on doit asservir la ligne de visée du télescope sur la zone d'observation. La résolution des images stéréoscopiques est dégradée par rapport à la résolution bidimensionnelle initiale. Par ailleurs, lorsque des objets ont été camouflés pour ne pas être détectés, cette méthode ne permet pas toujours de les identifier. Enfin, la détection d'objets en mouvement rapide est problématique.

Enfin, il existe des systèmes embarqués comportant à la fois des caméras et des systèmes LIDARs. Le document US 2010/0208244 intitulé « Flash Ladar System » en décrit un exemple.

Le système d'observation selon l'invention ne présente pas ces inconvénients. Il réunit dans un seul instrument comportant une seule optique de réception un télescope traditionnel et un lidar de type « flash lidar » dédié à la prise d'images tridimensionnelles. Plus précisément, l'invention a pour objet un système d'observation comportant un instrument d'observation destiné à être embarqué sur aéronef ou sur satellite, ledit instrument d'observation comprenant un télescope comportant un système catadioptrique et un premier imageur sensible dans une bande spectrale déterminée, l'instrument d'observation comportant :
- un lidar de type « flash lidar » comportant :
- un laser d'émission émettant des impulsions à une longueur d'onde déterminée ;
- une optique d'émission ;
- le système catadioptrique faisant office d'optique de réception des échos dus aux impulsions laser ;
- un second imageur ;
- un séparateur spectral disposé en avant du plan focal du système catadioptrique, ledit séparateur transmettant la longueur d'onde du laser d'émission de façon que les échos soient reçus par le second imageur et réfléchissant la bande spectrale déterminée de façon que l'image d'une zone observée par le télescope soit reçue par le premier imageur ou vice-versa.
caractérisé en ce qu'une zone d'observation terrestre étant photographiée une pluralité de fois à des instants différents par le télescope et donnant une pluralité d'images numériques bidimensionnelles permettant de faire une représentation tomographique de ladite zone d'observation, la même zone d'observation étant éclairée par une série d'impulsions laser émises à des instants différents par ledit laser d'émission et donnant une pluralité de séries d'échos, les moyens de traitement d'image calculent une image numérique tridimensionnelle à haute résolution de ladite zone d'observation à partir de ladite représentation tomographique et de ladite pluralité de séries d'échos.

Avantageusement, le télescope faisant l'image d'une zone d'observation terrestre de dimensions déterminées, l'optique d'émission est configurée pour éclairer une zone de dimensions inférieures, le système d'observation comportant un dispositif d'orientation bidimensionnel du laser d'émission, les amplitudes d'orientation étant au moins suffisantes pour balayer l'ensemble de la zone d'observation terrestre.

Avantageusement, la résolution du télescope est supérieure à la résolution du lidar.

Avantageusement, le champ d'observation du télescope est d'un ordre de grandeur supérieur à celui du lidar.

Avantageusement, la longueur d'onde déterminée du laser d'émission est située en dehors de la bande spectrale déterminée.

Avantageusement, la longueur d'onde du laser d'émission est située dans le visible.

Avantageusement, la longueur d'onde du laser d'émission est située dans le proche infrarouge.

Avantageusement, le système d'observation comporte des moyens permettant d'utiliser le laser d'émission comme illuminateur ou brouilleur dans une direction déterminée.

Avantageusement, le système catadioptrique a une ouverture comprise entre 0.1 mètre et 1 mètre et une focale comprise entre 2 mètres et 10 mètres.

L'invention sera mieux comprise et d'autres avantages apparaîtront à la lecture de la description qui va suivre donnée à titre non limitatif et grâce aux figures annexées parmi lesquelles :
La figure 1 représente le synoptique d'un « flash lidar » selon l'art antérieur ;
La figure 2 représente une vue en coupe de l'instrument d'observation selon l'invention ;
La figure 3 représente les zones terrestres de balayage d'un instrument d'observation selon l'invention.

Comme on l'a vu, un des inconvénients des systèmes d'observation embarqués selon l'art antérieur est qu'ils peuvent difficilement et rapidement restituer des images tridimensionnelles.

Il existe des systèmes optiques réalisant cette fonction. Il s'agit de « LiDARs » topographiques, acronyme signifiant « Light Détection And Ranging ». Un LiDAR topographique est un télémètre laser couplé à des moyens de localisation géoréférencés. Ce type de LiDAR est aéroporté ou embarqué sur une plateforme satellitaire. Ce système d'observation permet l'acquisition de nuages de points géoréférencés représentatifs du terrain survolé. On utilise également pour ce type de système le terme de « LADAR », signifiant « LAser Détection And Ranging ».

Depuis une quinzaine d'année, il existe de nouveaux systèmes lidar appelé « lidar à retour d'onde complète », connu aussi sous l'appellation anglo-saxonne « lidar full-waveform ». La principale caractéristique de ce type de LiDAR est leur capacité à numériser l'intégralité du signal ou de l'écho émis par le terrain lorsqu'il est balayé par le faisceau laser d'émission. On obtient ainsi une information beaucoup plus riche non seulement sur la topographie du terrain, mais sur sa nature. On trouvera des informations complémentaires sur ce type de LiDAR dans l'article intitulé « Le Lidar à retour d'onde complète : état de l'art », de C. Mallet et F. Bretar, paru dans Traitement du signal 2007 volume 24 numéro 6, pages 385-409.

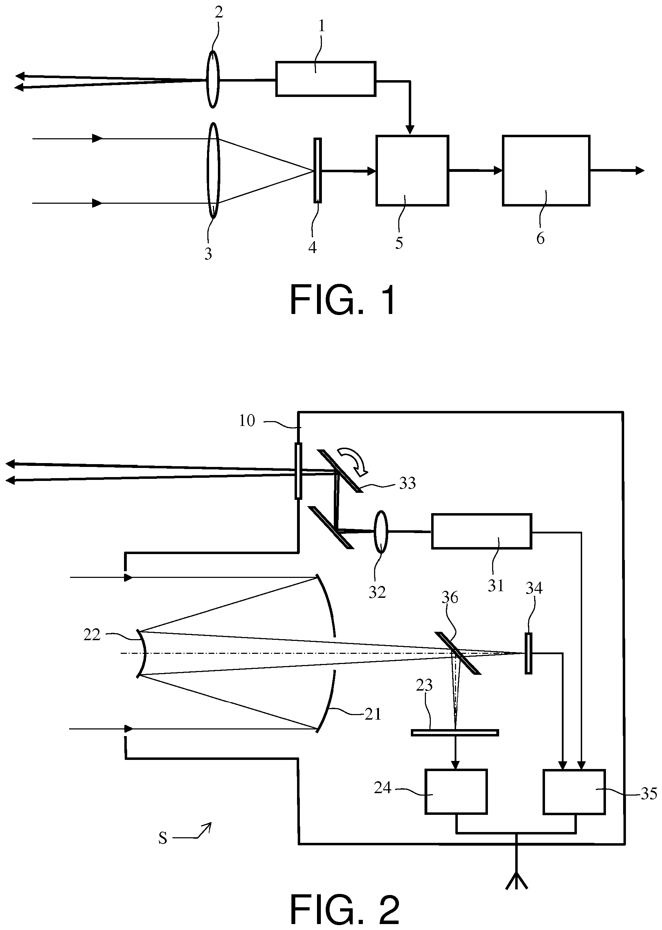

Plus récemment, une nouvelle génération de lidar est apparue. Ce type de lidar est appelé « 3-D Imaging Flash Lidar ». La différence essentielle entre ce lidar et les générations précédentes est que le terrain observé est éclairé par un seul « flash » laser et non pas par le balayage d'un faisceau étroit comme dans les applications précédentes dites « scanning lidar ». Le synoptique d'un « flash lidar » est représenté en figure 1. Il comporte essentiellement :
- un laser d'émission 1 émettant des impulsions brèves d'une durée comprise entre la nanoseconde et quelques nanosecondes à une cadence typique de 10 impulsions par seconde, la longueur d'onde d'émission étant généralement située dans le proche infrarouge, l'énergie d'une impulsion étant de quelques millijoules ;
- une optique de transmission 2 des impulsions laser. La caractéristique principale de cette optique est qu'elle éclaire l'intégralité de la scène dont on cherche à connaître la topographie ;
- une optique de réception 3 qui focalise les échos émis par la scène éclairée ;
- un photodétecteur matriciel 4 à bande passante élevée ;
- un circuit de lecture 5 de type « ROIC », acronyme signifiant « ReadOut Integrate Circuit », synchronisé avec les temps d'émission des impulsions et qui mesure, pour chaque impulsion, les temps d'arrivée de chaque écho sur chaque pixel du photodétecteur matriciel ;
- des moyens d'analyse 6 permettant, à partir de la connaissance des temps d'arrivée et de la forme des différents échos, de reconstituer la topographie et la topologie de la scène analysée.

On trouvera des informations complémentaires sur la technologie « Flash Laser » dans la présentation intitulée « Systèmes d'imagerie 3D Flash LiDAR pour applications spatiales » d'A. Pollini du 7 avril 2013, CSEM ainsi que dans la publication « Imaging Flash Lidar for Autonomous Safe Landing and Spacecraft Proximity Opération » de F. Amzajerdian et al.

Généralement, y compris pour des applications spatiales, les flash lidars fonctionnent à des distances qui peuvent être de l'ordre de quelques kilomètres à quelques dizaines de kilomètres. Pour des applications satellitaires, l'observation est réalisée nécessairement à haute altitude sur une orbite située à au moins 200 kilomètres et généralement au-delà. Il est alors nécessaire de disposer d'optiques de réception de grande ouverture. Le second inconvénient est que le champ de vue des flash lidars est moyenne et ne dépasse pas 200 x 200 pixels carrés. Ce champ est dix fois plus faible que celui d'un instrument d'observation classique.

Le système d'observation selon l'invention comporte à la fois un instrument d'observation classique et un flash lidar de façon à bénéficier à la fois de la haute résolution et du grand champ de l'instrument d'observation passif et de la possibilité de réaliser des images tridimensionnelles du flash lidar actif. On peut ainsi traiter des objets camouflés de façon à les mettre en évidence et/ou des objets mobiles, l'image du flash lidar étant instantané.

Le système d'observation selon l'invention peut être embarqué sur aéronef ou sur satellite, l'aéronef pouvant être un aérodyne ou un aérostat.

A titre de premier exemple non limitatif, la figure 2 représente un système d'observations satellitaire selon l'invention. Il comporte essentiellement deux instruments couplés qui sont un télescope et un flash lidar. Les deux instruments sont embarqués dans un satellite S représenté par son enveloppe externe 10 sur la figure 2. Ce satellite est préférentiellement un satellite d'observation évoluant en orbite polaire, c'est-à-dire à une altitude comprise entre 200 et 800 kilomètres.

Le télescope comporte essentiellement un système catadioptrique et un premier imageur 23.

Le système catadioptrique comporte généralement un miroir primaire 21 généralement asphérique et un miroir secondaire 22. A titre d'exemple, l'ouverture du télescope a un diamètre de 60 centimètres et une focale de plusieurs mètres.

Le premier imageur 23 est un imageur à haute résolution, haute sensibilité et à bas niveau de bruit, généralement à technologie « CMOS », CMOS est un acronyme signifiant « Complementary Metal Oxide Semi-conductor ». A titre d'exemple, les dimensions de la matrice sont 14x16.6 millimètres carrés, la taille des pixels carrés vaut 6.5 microns et le nombre de pixels vaut 2160 pixels par 2560 pixels. La sensibilité spectrale de l'imageur est comprise entre 400 nanomètres et 1000 nanomètres avec un maximum d'efficacité quantique de 0.55 autour de 600 nanomètres.

L'imageur 23 transmet l'image à des moyens de traitement d'images 24.

Pour donner des ordres de grandeur des dimensions de la zone d'observation et de la résolution au sol, pour une altitude du satellite de 400 kilomètres et une focale de 2.6 mètres, le champ couvert au sol est un rectangle de 2.16 x 2.56 km², la résolution étant de 1 mètre. Pour la même altitude du satellite et une focale double de 5.2 mètres, le champ couvert au sol est un rectangle de 1.08 x 1.28 km², la résolution étant de 50 centimètres.

Le flash lidar comporte :
- un laser d'émission 31 émettant des impulsions brèves d'une durée comprise entre la nanoseconde et quelques nanosecondes à une cadence typique de 10 impulsions par seconde, l'énergie d'une impulsion étant de quelques millijoules. Cette cadence d'émission est donnée à titre indicatif et peut être supérieure. Sa longueur d'onde d'émission est généralement située dans le proche infrarouge. A titre de premier exemple, le laser d'émission est un laser à rétroaction répartie ou « DFB », acronyme signifiant « Distribued FeedBack ». Ce type de laser émet à 1570 nm. A titre de second exemple, le laser d'émission est un laser Nd :-YAG, acronyme signifiant « Neodymium-Doped Yttrium Aluminium Grenat » émettant à 1064 nm. Il serait possible d'utiliser un laser émettant dans le visible, par exemple à la longueur d'onde de 532 nanomètres mais cette solution entraîne des contraintes plus importantes sur la séparation des images et peut présenter des problèmes de sécurité oculaire ;
- une optique d'émission 32. La fonction de cette optique d'émission est de générer un faisceau laser légèrement divergent susceptible de couvrir une zone d'éclairage, généralement de dimensions inférieures à la zone d'observation du télescope ;
- un dispositif 33 d'orientation bidimensionnel du faisceau laser. Ce dispositif permet d'orienter le faisceau laser d'émission à l'intérieur de la zone d'observation. L'amplitude des déplacements est au moins conditionnée par le temps séparant la prise de vue de la zone d'observation et son éclairage par le laser d'émission. Sur la figure 2, on a représenté symboliquement ce système par un miroir surmonté d'une flèche en arc-de-cercle, la rotation du miroir 33 étant assurée par des moyens mécaniques. D'autres systèmes de déflexion sont possibles ;
- une optique de réception. Dans le système d'observation selon l'invention, cette optique de réception est le système catadioptrique du télescope composé des miroirs 21 et 22. On obtient ainsi une optique de réception de grande ouverture sans ajouter de composants optiques supplémentaires ;
- un second imageur 34 destiné à recevoir les échos de la zone d'éclairage. Actuellement, il n'est pas possible d'obtenir un imageur compatible de la technique « flash laser » à très haute résolution. Les meilleurs imageurs pour flash lidar ont un nombre de pixels de 128 x 128 pixels carrés ou de 240 x 232 pixels carrés. A champ égal, la résolution du flash laser est donc 10 fois inférieure à celle du télescope dont l'imageur comporte environ 100 fois plus de pixels. Aussi, il est intéressant que la zone d'observation du flash lidar soit de dimensions bien inférieures à celles de la zone d'observation du télescope de façon que les parties de zones d'observation communes au télescope et au flash lidar aient des résolutions voisines. Dans les exemples précédents, il a été défini une première zone d'observation du télescope de 2.16 x 2.56 km² avec une résolution d'un mètre au sol. Dans ce cas, une zone d'observation adaptée du flash lidar peut être comprise entre 128 x 128 m² et 480 x 464 m² selon le nombre de pixels du second imageur et la résolution du flash lidar que l'on souhaite obtenir ;
- un circuit de lecture 35 de type « ROIC » comme déjà décrit, synchronisé avec les temps d'émission des impulsions et qui mesure, pour chaque impulsion, les temps d'arrivée de chaque écho sur chaque pixel du second imageur ;
- l'optique de réception étant commune au télescope et au flash lidar, il faut nécessairement séparer l'image du télescope des échos du flash lidar en évitant d'introduire des pertes trop importantes. Or, le télescope travaille essentiellement dans la bande visible du spectre et le flash lidar dans l'infrarouge. La solution la plus simple est donc de disposer un séparateur spectral 36 en avant du plan focal du système catadioptrique. Sur la figure 2, ce séparateur 36 transmet la longueur d'onde du laser d'émission de façon que les échos soient reçus par le second imageur et réfléchit la bande spectrale du télescope de façon que l'image d'une zone observée par le télescope soit reçue par le premier imageur. Bien entendu, selon l'agencement du système d'observation, le séparateur peut réaliser la fonction inverse, c'est-à-dire réfléchir la longueur d'onde laser et transmettre la partie visible du spectre. Si le flash lidar émet dans la bande spectrale du télescope, il faut alors utiliser soit une séparation spectrale ciblée précisément sur sa longueur d'onde d'émission, soit d'autres moyens de séparation comme la séparation temporelle des images.

Le télescope d'observation a deux modes de fonctionnement. Dans un premier mode de fonctionnement, le télescope délivre une image unique haute résolution bidimensionnelle couvrant une première zone. Dans le second mode de fonctionnement, le télescope délivre une série d'images corrélées prises par le satellite sous des incidences différentes à différents instants et couvrant la même zone d'observation, permettant de réaliser une vue tomographique de ladite zone.

Ainsi, avec le système d'observation selon l'invention, on dispose de deux images, la première issue du télescope et la seconde image tridimensionnelle réalisée à partir des échos diffusés par le terrain à plus basse résolution fournie par le flash lidar couvrant une seconde zone d'observation de dimensions inférieures à la première zone. La première image est soit une image tridimensionnelle simple, soit une image tridimensionnelle tomographique. Généralement, ces deux images sont dans des spectres optiques différents. Le traitement des images peut être réalisé dans le satellite lui-même ou dans une station au sol, les données brutes issues des imageurs sont alors transmises par le satellite.

Les deux zones d'observation ne se recoupent pas nécessairement mais il est intéressant d'observer une même zone d'observation au moyen des deux instruments.

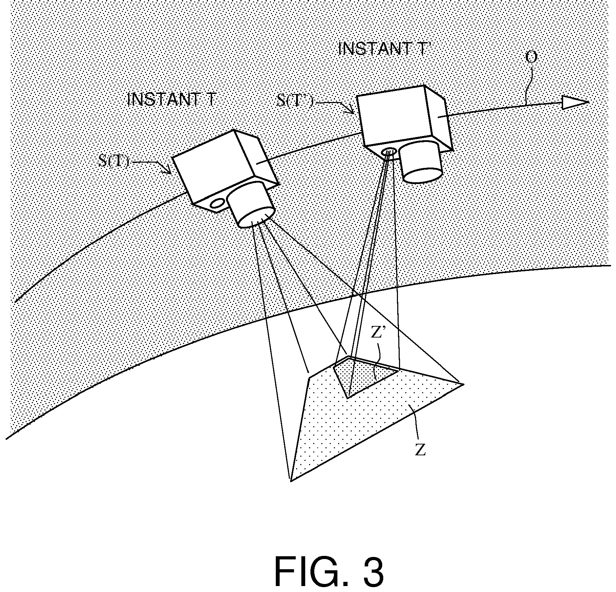

La figure 3 illustre ce principe. Elle représente un satellite S en rotation autour de la terre sur une orbite O à deux instants différents T et T'. Cette orbite est, à titre d'exemple, une orbite polaire. A l'instant T, ce satellite S occupe une première position S(T) sur sa trajectoire et photographie une première zone d'observation Z au moyen de son télescope. A l'instant T', le satellite S a bougé. Il occupe une seconde position S(T') sur sa trajectoire. Le flash lidar est activé et prend une vue tridimensionnelle d'une seconde zone d'observation Z' de dimensions inférieures à celles de la première zone d'observation. Grâce à son dispositif d'orientation bidimensionnelle, la seconde zone d'observation Z' recoupe une partie de la première zone d'observation Z.

On dispose alors pour un même site de plusieurs images, une image bidimensionnelle ou une image tomographique haute résolution fournie par le télescope à partir d'une pluralité d'images prises sous des incidences différentes à différents instants et une image tridimensionnelle à plus basse résolution. Il est alors possible de traiter simultanément ces différentes images pour obtenir une image tridimensionnelle haute résolution de la taille de l'image lidar.

A titre de second exemple non limitatif, le télescope et le flash lidar sont embarqués dans un drone évoluant à haute altitude, c'est-à-dire à des altitudes comprises entre 15 à 25 kilomètres. Dans ce cas, les dimensions des optiques et les puissances émises sont adaptées en conséquence de façon à obtenir un bilan photométrique correct pour le flash lidar et une résolution adaptée.

La même zone d'observation peut être éclairée par une série d'impulsions laser émises à des instants différents par le laser d'émission et donnant une pluralité de séries d'échos de façon à augmenter la définition. Les moyens de traitement d'image calculent une image numérique tridimensionnelle à haute résolution de ladite zone d'observation à partir de ladite représentation tomographique et de ladite pluralité de séries d'échos suivant des angles différents. L'ensemble des données est concaténé pour fournir une image 3D de la scène à haute résolution permettant de traiter les objets camouflés et/ou les objets mobiles.

Il est également possible d'utiliser le laser d'émission comme illuminateur ou brouilleur dans une direction déterminée, par exemple pour brouiller les optiques de satellites hostiles.

Les avantages du système d'observation selon l'invention est qu'il permet de délivrer à la fois des images à haute résolution permettant, par exemple, de découvrir ou d'observer des objets camouflés et également des images à cadence élevée en privilégiant les images du flash lidar, permettant de suivre, par exemple, des véhicules en mouvement.

## Revendications

1. Système d'observation (S) comportant un instrument d'observation destiné à être embarqué sur aéronef ou sur satellite, ledit instrument d'observation comprenant un télescope comportant un système catadioptrique (21, 22) et un premier imageur (23) sensible dans une bande spectrale déterminée, l'instrument d'observation comprenant :
- un lidar de type « flash lidar » comportant :
- un laser d'émission (31) émettant des impulsions à une longueur d'onde déterminée ;
- une optique d'émission (32) ;
- le système catadioptrique faisant office d'optique de réception des échos dus aux impulsions laser ;
- un second imageur (34) ;
- un séparateur (36) disposé en avant du plan focal du système catadioptrique, ledit séparateur transmettant la longueur d'onde du laser d'émission de façon que les échos soient reçus par le second imageur et réfléchissant la bande spectrale déterminée de façon que l'image d'une zone observée par le télescope soit reçue par le premier imageur ou vice-versa ;
**caractérisé en ce qu'**une zone d'observation terrestre étant photographiée une pluralité de fois à des instants différents par le télescope et donnant une pluralité d'images numériques bidimensionnelles permettant de faire une représentation tomographique de ladite zone d'observation, la même zone d'observation étant éclairée par une série d'impulsions laser émises à des instants différents par ledit laser d'émission et donnant une pluralité de séries d'échos, les moyens de traitement d'image calculent une image numérique tridimensionnelle à haute résolution de ladite zone d'observation à partir de ladite représentation tomographique et de ladite pluralité de séries d'échos.

2. Système d'observation selon la revendication 1, **caractérisé en ce que** le télescope faisant l'image d'une zone d'observation terrestre (Z) de dimensions déterminées, l'optique d'émission est configurée pour éclairer une zone (Z') de dimensions inférieures, le système d'observation comportant un dispositif d'orientation bidimensionnel (33) du laser d'émission, les amplitudes d'orientation étant au moins suffisantes pour balayer l'ensemble de la zone d'observation terrestre.

3. Système d'observation selon l'une des revendications précédentes, **caractérisé en ce que** la résolution du télescope est supérieure à la résolution du lidar.

4. Système d'observation selon l'une des revendications précédentes, **caractérisé en ce que** le champ d'observation du télescope est d'un ordre de grandeur supérieur à celui du lidar.

5. Système d'observation selon l'une des revendications précédentes, **caractérisé en ce que** la longueur d'onde déterminée du laser d'émission est située en dehors de la bande spectrale déterminée.

6. Système d'observation selon l'une des revendications précédentes, **caractérisé en ce que** la longueur d'onde du laser d'émission est située dans le visible.

7. Système d'observation selon l'une des revendications 1 à 5, **caractérisé en ce que** la longueur d'onde du laser d'émission est située dans le proche infrarouge.

8. Système d'observation selon l'une des revendications précédentes, **caractérisé en ce que** le système d'observation comporte des moyens permettant d'utiliser le laser d'émission comme illuminateur ou brouilleur dans une direction déterminée.

9. Système d'observation selon l'une des revendications précédentes, **caractérisé en ce que** le système catadioptrique a une ouverture comprise entre 0.1 mètre et 1 mètre et une focale comprise entre 2 mètres et 10 mètres.

## Patentansprüche

1. Beobachtungssystem (S), welches ein Beobachtungsinstrument umfasst, welches dazu bestimmt ist, an Bord eines Luftfahrzeugs oder eines Satelliten mitgeführt zu werden, wobei das Beobachtungsinstrument ein Teleskop umfasst, welches ein katadioptrisches System (21, 22) und einen ersten Bildgeber (23) umfasst, welcher in einem bestimmten Spektralband empfindlich ist, wobei das Beobachtungsinstrument folgendes umfasst:
- einen Lidar vom Typ "Flash Lidar", Folgendes umfassend:
- einen Sendelaser (31), welcher Impulse bei einer bestimmten Wellenlänge aussendet;
- eine Sendeoptik (32) ;
- wobei das katadioptrische System als Empfangsoptik der durch die Laserimpulse verursachten Echos fungiert;
- einen zweiten Bildgeber (34);
- eine Trennvorrichtung (36), welche vor der Fokalbene des katadioptrischen Systems angeordnet ist, wobei die Trennvorrichtung die Wellenlänge des Sendelasers so überträgt, dass die Echos durch den zweiten Bildgeber empfangen werden und das bestimmte Spektralband so reflektiert, dass das Bild eines durch das Teleskop beobachteten Bereichs durch den ersten Bildgeber empfangen wird oder umgekehrt;
**dadurch gekennzeichnet, dass**, da ein terrestrischer Beobachtungsbereich mehrmals zu unterschiedlichen Zeitpunkten durch das Teleskop fotografiert wird, und eine Vielzahl von zweidimensionalen digitalen Bildern ergibt, wodurch es ermöglicht wird, eine tomografische Darstellung des Beobachtungsbereichs anzufertigen, wobei der gleiche Beobachtungsbereich durch eine Reihe von Laserimpulsen beleuchtet wird, welche zu unterschiedlichen Zeitpunkten durch den Sendelaser ausgesandt werden, und eine Vielzahl von Echoserien ergibt, die Bildverarbeitungsmittel ein dreidimensionales, digitales, hochauflösendes Bild des Beobachtungsbereichs anhand der tomografischen Darstellung und der Vielzahl von Echoserien berechnen.

2. Beobachtungssystem nach Anspruch 1, **dadurch gekennzeichnet, dass**, da das Teleskop das Bild eines terrestrischen Beobachtungsbereichs (Z) mit bestimmten Abmessungen aufnimmt, die Sendeoptik konfiguriert ist, um einen Bereich (Z') mit geringeren Abmessungen zu beleuchten, wobei das Beobachtungssystem eine zweidimensionale Ausrichtungsvorrichtung (33) des Sendelasers umfasst, wobei die Ausrichtungsamplituden mindestens ausreichen, um den gesamten terrestrischen Beobachtungsbereich abzutasten.

3. Beobachtungssystem nach einem der vorhergehenden Ansprüche, **dadurch gekennzeichnet, dass** die Auflösung des Teleskops größer als die Auflösung des Lidars ist.

4. Beobachtungssystem nach einem der vorhergehenden Ansprüche, **dadurch gekennzeichnet, dass** das Beobachtungsfeld des Teleskops eine höhere Größenordnung als diejenige des Lidars aufweist.

5. Beobachtungssystem nach einem der vorhergehenden Ansprüche, **dadurch gekennzeichnet, dass** die bestimmte Wellenlänge des Sendelasers außerhalb des bestimmten Spektralbandes liegt.

6. Beobachtungssystem nach einem der vorhergehenden Ansprüche, **dadurch gekennzeichnet, dass** die Wellenlänge des Sendelasers im sichtbaren Bereich liegt.

7. Beobachtungssystem nach einem der Ansprüche 1 bis 5, **dadurch gekennzeichnet, dass** die Wellenlänge des Sendelasers im nahen Infrarot liegt.

8. Beobachtungssystem nach einem der vorhergehenden Ansprüche, **dadurch gekennzeichnet, dass** das Beobachtungssystem Mittel umfasst, die es ermöglichen, den Sendelaser als Beleuchtungs- oder Störvorrichtung in einer bestimmten Richtung zu verwenden.

9. Beobachtungssystem nach einem der vorhergehenden Ansprüche, **dadurch gekennzeichnet, dass** das katadioptrische System eine Öffnung zwischen 0,1 Meter und 1 Meter und eine Brennweite zwischen 2 Metern und 10 Metern aufweist.

## Claims

1. An observation system (S) comprising an observation instrument intended to be placed on board an aircraft or a satellite, said observation instrument comprising a telescope comprising a catadioptric system (21, 22) and a first imaging device (23) that is sensitive in a determined spectral band, the observation instrument comprising:
- a "flash lidar" type lidar comprising:
- an emission laser (31) emitting pulses with a determined wavelength;
- an emission optic (32);
- the catadioptric system acting as an optic for receiving echoes due to the laser pulses;
- a second imaging device (34);
- a splitter (36) disposed in front of the focal plane of the catadioptric system, said splitter transmitting the wavelength of the emission laser so that the echoes are received by the second imaging device and reflecting the determined spectral band so that the image of a zone observed by the telescope is received by the first imaging device, or vice versa;
**characterised in that**, with a terrestrial observation zone being photographed several times at different instants by the telescope and providing a plurality of two-dimensional digital images allowing a tomographic representation of said observation zone to be provided, the same observation zone being illuminated by a series of laser pulses emitted at different instants by said emission laser and providing a plurality of series of echoes, the image processing means compute a high-resolution three-dimensional digital image of said observation zone based on said tomographic representation and of said plurality of series of echoes.

2. The observation system according to claim 1, **characterised in that**, with the telescope taking the image of a terrestrial observation zone (Z) with determined dimensions, the emission optic is configured to illuminate a zone (Z') with smaller dimensions, the observation system comprising a device (33) for two-dimensional orientation of the emission laser, the orientation amplitudes being at least sufficient for scanning the entire terrestrial observation zone.

3. The observation system according to any one of the preceding claims, **characterised in that** the resolution of the telescope is greater than the resolution of the lidar.

4. The observation system according to any one of the preceding claims, **characterised in that** the observation field of the telescope has an order of magnitude that is greater than that of the lidar.

5. The observation system according to any one of the preceding claims, **characterised in that** the determined wavelength of the emission laser is found outside the determined spectral band.

6. The observation system as claimed in any one of the preceding claims, **characterised in that** the wavelength of the emission laser is found in the visible field.

7. The observation system according to any one of claims 1 to 5, **characterised in that** the wavelength of the emission laser is found in the near-infrared field.

8. The observation system according to any one of the preceding claims, **characterised in that** the observation system comprises means for using the emission laser as an illuminator or jammer in a determined direction.

9. The observation system according to any one of the preceding claims, **characterised in that** the catadioptric system has an aperture ranging between 0.1 metre and 1 metre and a focal length ranging between 2 metres and 10 metres.
